# EUROPEAN PATENT APPLICATION

(11) **EP 4 239 419 A1**
(43) Date of publication of application: **06.09.2023**
(21) Application number: 22159479.9
(22) Date of filing: 01.03.2022
(51) Int. Cl.: G05B 13/02, G05B 19/042

(54) **CONDITION MONITORING OF AN ELECTRIC POWER CONVERTER**

(71) Applicant: Siemens Aktiengesellschaft, 80333 München (DE)
(72) Inventor: Al Hage Ali, Ali, 91052 Erlangen (DE); Amschler, Benjamin, 95500 Heinersreuth (DE); Westrich, Johanna, 81375 München (DE); Zacharias, Dominik, 90765 Fürth (DE)
(74) Representative: Siemens Patent Attorneys

(57) **Abstract**

A computer-implemented method of providing a machine learning model (ML) for condition monitoring of an electric power converter (1) comprising the steps of:
- obtaining a first batch (B1) of input data (D), the input data (D) comprising a number of samples (31) of one or more operating parameters (P1, ..., Pn) of the converter (1) during at least one operating state (O1, O2) of the converter (1), - reducing the number of samples (31) of the first batch (B1) by clustering the samples of the first batch (B1) into a first set of clusters (C1), preferably according to a first clustering algorithm (AL1), e.g., based on a clustering feature tree, such as BIRCH, and determining at least one representative sample (R1) for each cluster (C1), -providing the representative samples (R) for training the machine learning model (ML) and/or training the machine learning model (ML) based on the representative samples (R1).

## Description

### TECHNICAL FIELD

The present invention relates to the field of electric power converters and to use of machine learning techniques for monitoring electric power converters.

### BACKGROUND

During the operation of a plant comprising one or more machines, changes occur over time that may not be recognizable to the plant operator. These changes can be caused by the mechanics of the machine(s), but can also have electrical reasons. This can lead to increased wear in the machine(s) or influence the produced quality of a product. If changes in the plant are not detected at an early stage, this may lead to increased downtime and additional or increased maintenance costs. A recognition of gradual changes may also be rather subjective, i.e., based on the individual assessment of a respective plant operator.

Technically complex relationships such as the correlation and the detection of changes with regard to a large number of simultaneously relevant process parameteres can hardly be monitored and correctly assessed by the plant operator. For example, changes in a drive system, comprising a electric power converter, a motor and/or transmission, and/or in the actual process, could therefore usually only be detected when the change has become noticeable, e.g., in the form of a shutdown and/or a quality defect. The monitoring functions and analysis options available in the converter partly provide active protection and may serve for detecting problems occurring in the plant. However, the analysis is only performed retroactively and not during the occurrence of the damage.

Due to the amount of data required for a detailed assessment of the condition of the drive system, a correspondingly largeamount of computing power and data storage has been required so far. Up untill now, the evaluation could thus not be carried out close to the drive system, but was usually carried out in computing units, which did not possess a direct high-frequency access to the data at the field level of the plant.

Through regular manual inspection and continuous maintenance of the plant components, the condition of the plants and machines is monitored today. In most cases, changes or problems are only detected when machines and systems have failed. The manual error analysis thus only begins when the problem has already occurred and possibly high costs have arisen due to machine and plant downtime. In addition, the experience of the maintenance and service personnel plays a decisive role in an analysis.

International patent application PCT/EP2021/069728 discloses a method of optimizing a control loop of a converter, the method comprising the steps of: acquiring actual values of a drive system powered by the converter, inferring, based on at least one machine learning model and the actual values, one or more adjustments of control parameters of the control loop for improving the control accuracy, outputting the adjustments for adapting the control parameter values.

Furthermore it is disclosed in European patent application EP21200255 to improve the monitoring of a machine by providing training data of several nominal operating states of the machine and to cluster the training data according to the operating states of the machine and to train a classifier that assigns the operating states to the clustered training data.

### SUMMARY

In any case, the amount of data that is obtained during the operation of the drive system, and the converter in particular, may become too large and/or unbalanced. In addition, present-day converters and/or other process-level components may not possess sufficient computing and/or storage capability to handle the data in a timely manner.

It is therefore an object of the present disclosure to improve the data handling for monitoring a drive system and a converter in particular. It is a further object of the present invention to improve the accuracy when it comes to determining an abnormal operation in the operation of a converter or drive system in general.

According to a first aspect, the object is achieved by a computer-implemented method of providing a machine learning model for condition monitoring of an electric power converter. The method comprising the step of obtaining a first batch of input data, the input data comprising a number of samples of one or more operating parameters of the converter during at least one operating state of the converter. The method further comprising the step of reducing the number of samples of the first batch by clustering the samples of the first batch into a first set of clusters, preferably according to a first clustering algorithm, e.g., based on a clustering feature tree, such as BIRCH. The method further comprising the step of determining at least one representative sample for each cluster. The method further comprising the step of providing the representative samples for training the machine learning model and/or training the machine learning model based on the representative samples.

According to a second aspect, the object is achieved by the use of the trained machine learning model according to the first aspect.

According to a third aspect, the object is achieved by a trained machine learning model obtained by the steps of the first aspect.

According to a fourth aspect the object is achieved by a device, preferably comprising a first and/or a second memory unit, operative to perform the steps according to the first aspect.

### BRIEF DECSRITPION OF THE DRAWINGS

Figure 1 shows a schematic illustration of a converter powering a drive system.
Figure 2 shows a table comprising a plurality of operating parameters of a converter
Figure 3 shows an illustration of input data divided into a pluarlity of batches.
Figure 4 shows an illustration of a first set of clusters and representative samples of each cluster.
Figure 5 shows all samples of the input data and representative samples of the input data obtained by data reduction.
Figure 6 shows exemplary method steps of incremental preprocessing, data reduction, and/or re-sampling for training a machine learning model.
Figure 7 shows representative samples of the input data to which additional samples are added (re-sampled).
Figure 8 shows exemplary method steps when applying the machine learning model.
Figure 9 shows an ilustration of an anomaly score as output by the machine learning model and a pre-determined threshold.
Figure 10 shows a device comprising a processing unit and a first and a second memory.

### DETAILED DESCRITPION

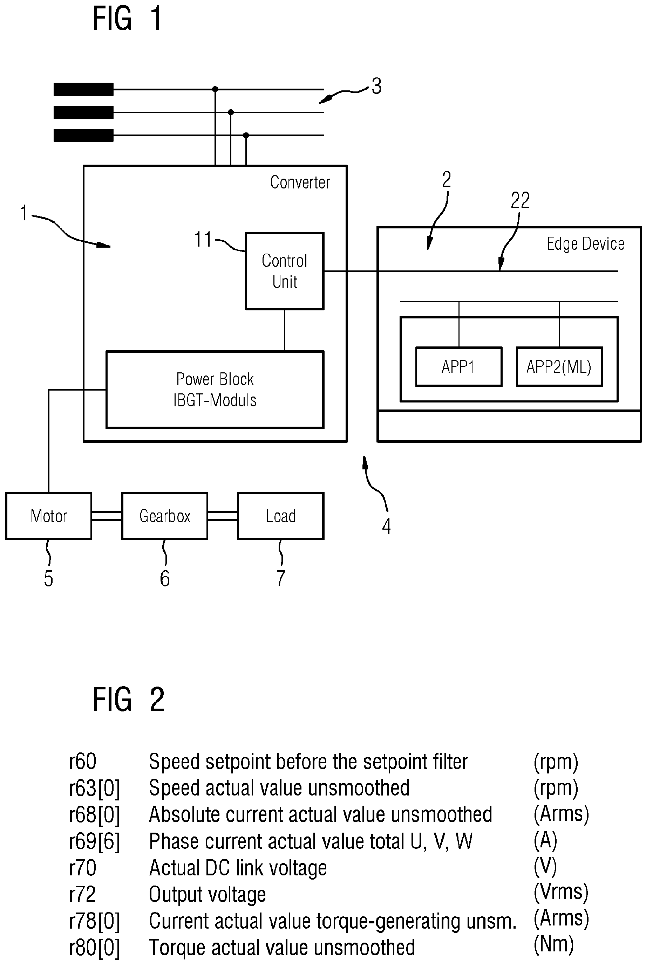

In Figure 1 an electric power converter 1, also denoted as converter in the following, and a drive system 4 are shown. The control of the drive system 4 is performed by the converter 1 and a control unit 11 preferably integrated into the converter 1. To that end, the converter 1 is part of a control loop and may comprise a processor and a memory to control the drive system 4. The converter 1 hence powers a motor 5 of the drive system 4. The drive system 4 may thus comprise the converter 1, which is coupled to a line voltage 3. The drive system may further comprise the motor 5. A gearbox 6 may be coupled to the motor 5. The gearbox 6 may be couple to a load 7, e.g., for performing one or more process steps in the production of a product. Alternatively, the motor 5 may be directly coupled to the load 7. The control unit 11 of the converter 1 controls one or more insulated-gate bipolar transistors (IGBT) of a power block, which serve as electronic switches for providing electric energy to the motor 5.

The converter 1 is connected to an edge device 2. To that end, the control unit 11 of the converter 1 may be connected to a data bus 22 via which the one or more operating parameters of the converter are transmitted. The edge device 2 may comprise one or more analytics software applications, APP1, APP2, e.g. comprising a machine learning model ML, for processing the data obtained from the converter 1. Hence, the control unit 11 may provide input data to the one or more analytics software applications of the edge device 2. As the case may be, the edge device 2 may serve for providing connectivity of the converter 1 with a higher-level system such as a cloud computing system, not shown, and/or the edge device 2 may serve as an on-site computing unit for processing the input data provided by the converter 1. It should be understood that the data bus 22 is part of the edge device 2 and may be coupled to the converter 1 via respective interfaces of the converter 1 and the edge device 2. The analytics software applications APP1, APP2 may be executed on an operating system OS, e.g. linux, of the edge device 2.

The proposed solution is capable of monitoring the drive system 4 including the application specific usage of the drive system 4 and the converter 1, respectively. Existing data from the converter 1 is used, which means that no additional measuring sensors are required. This data is then used to detect anomalies in the drive system 4 and to determine deviations from a normal operating state. For anomaly detection, two phases are necessary. The first phase, i.e., the training phase, performs data preprocessing, feature extraction, and model training. The second phase, i.e., the application phase, describes the productive use, also consisting of data preprocessing, feature extraction and final anomaly detection.

Figure 2 shows a table comprising a plurality of operating parameters of a converter. The analytics software application APP1, APP2 may detect changes in the operation of the drive system, in particular the converter, which can be harmful or lead to a lower performance or quality of the production or product. The operating parameters of the converter as shown in Figure 2 may used to detect these anomalies. The operating parameters can be identified using a variable name, such as given in the first column of Figure 2, e.g. the speed setpoint is identified by the variable name r60. The operating parameters may possess a physical unit in which they are measured or otherwise obtained, e.g., the speed setpoint is given in rpm, revolutions per minute. Other operating parameters such as the "absolute current actual value unsmoothed" may be given in Arms, Ampere root mean square or in case of the "torque actual value unsmoothed" in Nm, Newtonmeter. The operating parameters my be provided in a data format such as float, e.g., FloatingPoint32, or the like and/or may be provided by the converter 1, e.g., via the contrul unit 11 and the data bus 22 to the analytics software application APP1, APP2, as e.g., shown in Figure 1.

Now, the converter may provide the operating parameters, e.g., every few millisenconds, for example every 250 ms. This high data rate leads to a significant amount of data, i.e., data volume, that has to be stored and processed by the edge device 2 and/or the respective analytics software applications APP1, APP2. Additionally, more than one converter, i.e. a pluraltity of converters may be coupled to the edge device and these converters may transmit their respective operating parameters to the (same) edge device.

Hence, a method is needed that allows for processing the large amount of data by the edge device and the respective analytics software applications. It is thus proposed to process the input data obtained from the converter 1 successively in a batch-wise manner.

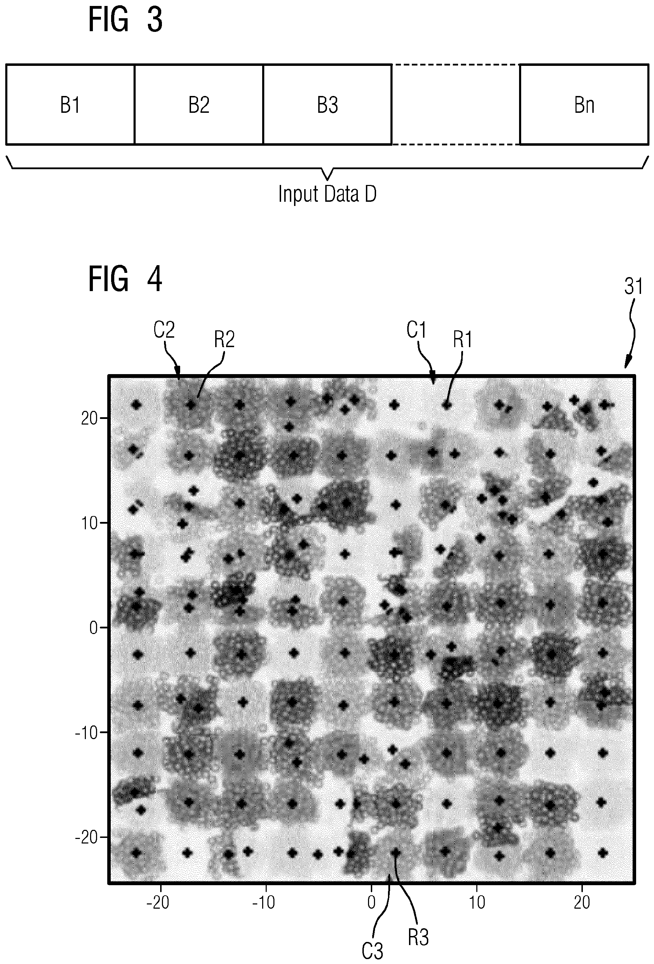

Figure 3 shows an illustration of input data D divided into a pluarlity of batches B1, B2, ..., Bn. The input data D may comprise a so called fingerprint, i.e., reference values that serve as a baseline for the operation of the converter. The input data D may comprise as outlined in the above one or more of the operating parameters of the converter. The analytics software application may comprise a machine learning model that utilises this reference data of the converter, which typically represents a healthy, normal condition, for training, e.g. during a training phase. The fingerprint of the operation of the converter is comprised in the input data D and may conprise several operating states and include several signals/parameters from the converter and/or drive system. Anomalies hence represent deviations from this fingerprint.

The recording of the fingerprint may be started for example by a user using a user interface. The recording time of the fingerprint should include multiple and preferably all possible working points of the drive system and the converter, respectively. It is thus necessary that the fingerprint includes sufficient operating states, e.g., for the analytics software application to work properly.

As mentioned herein, for the recognition of the condition of the drive system a reference measurement, called fingerprint, is recorded. This fingerprint should span a period of time that is significant enough for the operation of the drive system and its application. All operating states typical for the application must be part of this fingerprint. The start time and the duration of the fingerprint can be set by the user, e.g. said plant operator. For example, the time range can be from six hours to two weeks depending on the application to monitor. Based on the fingerprint an machine learning model is created and may be stored, for example on the edge device. Later, a new fingerprint may recorded and be used to update and retrain the machine learning model by selecting a new start time and duration. The recording of the fingerprint is based on raw data from the converter, which raw data may be saved in the database for a predetermined period of time. The more constant the operating states of the drive system are while the fingerprint is being recorded, the easier it is for the machine learning model to learn these operating states. As a result, the anomaly detection works more accurately and reliably.

Due to limitations of the hardware of the edge device, the duration of the fingerprint which can be processed and/or used for training of a machine learning model may be limited. In any case, the user can still specify the duration of the fingerprint as usual. However, if the size of the dataset resulting after preprocessing exceeds a predefined limit, e.g., 65,000 samples, the machine learning model will be only trained using the first 65,000 samples of processed data. The anayltics software application may output, e.g., display on a user interface, the actual time range trained. For a motor which runs in only two operating states a predefined limit of, e.g., 65,000, samples will not be reached in two weeks of training. But for an application which runs in different operating states every minute, a predefined limit of, e.g., 65,000, samples may be reached within two days.

If not all operating states typical for the application of the drive system are covered by the fingerprint, the analytics software application may detect a multitude of anomalies, e.g., because a specific operating state is not known by the machine learning model.

Once the machine learning model has been trained the machine learning model of the analytics software application may be used for inference or prediction, i.e. determining an abnormal operation and/or anomaly of the converter, e.g. based on an anomaly score output by the machine learning model. During this application phase new input data may be obtained from the converter which is used by the machine learning model for inference or prediction. As shown in Figure 3 the input data may also be divided into one or more partitions, e.g. a plurality of batches.

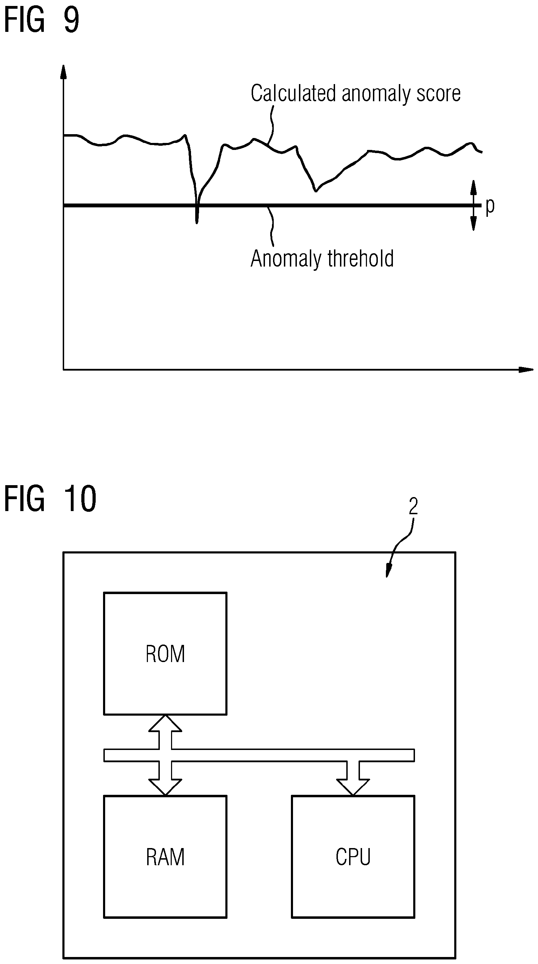

As shown in Figure 3, the input data D may be divided into batches of equal size, i.e. containting the same amount of data. However, one or more batches may also comprise a different amount of data. As will be described later in more detail, the input data D may be stored in a first memory of the edge device, whereas the individual batches B1, B2, B3, ... Bn are transmitted and successively stored in a second memory of the edge device. For that matter, a batch stored in the second memory may at least partially be overwritten once a new batch is obained by the second memory. In oder to store the input data D, the first memory possesses a storage capacity to store the input data and the amount of data of the input data is pre-set to be lower than the storage capacity of the first memory, respectively. Furthermore, the storage capacity of the second memory is lower than the one of the first memory and the data volume of the one or more batches is such that it may be stored on the second memory. As will be seen later, cf. Figure 10, the second memory serves as a working memory of a processor that processes the one or more batches successively, e.g. in order to train a machine learning model (during the training phase) or to determine a abnormal operating state or anomaly (during the application phase). The first memory may be a non-volatile memory whereas the second memory is a volatile memory.

In any case, the input data D as shown in Figure 3 may correspond to the above mentioned fingerprint. This fingerprint serves as a reference measurement and includes reference conditions that may be understood as normal, i.e., normal operating state(s) of the converter and/or normal range of operating parameters of the converter. The analytics software application utilises a reference measurement of the drive system and/or converter, respectively, as a baseline which typically reperesents the healthy normal conditions of the drive system and/or the converter. The fingerprint may cover several operating states and include several operating parameters of the drive system and/or the converter, respectively. Anomalies or abnormal operating states represent deviations from this baseline condition.

Figure 4 shows an illustration of a first set 31 of clusters C1, C2, C3 and representative samples R1, R2, R3 of each cluster C1, C2, C3. Now, in order to reduce the amount of data of the input data and the one or more batches, a data reduction is performed. To that end, the samples contained in a batch, e.g., the first batch, are clustered and a represenzative sample for each cluster is determined. Hence, a cluster comprises one or more samples of the batch.The one or more clusters may be created by a clustering algorithm such as BIRCH, balanced iterative reducing and clustering using hierarchies. BIRCH is a memory-efficient, learning method which iteratively builds a tree data structure (clustering feature tree CFT) where the data, i.e., the samples, is compressed to a set of clustering feature nodes (CF nodes). The input data and the batch(es), respectively, is reduced to a first set 31 of clusters which are obtained directly from the leaves of the tree. The BIRCH algorithm uses this tree structure to create clusters. It is generally called the Clustering Feature Tree (CF Tree). Each node of this tree is composed of several Clustering features (CF).

For each cluster C1, C2, C3 a representative sample R1, R2, R3 is determined. Thereby, the information content of the cluster C1, C2, C3 is condensed from multiple samples to a single sample R1, R2, R3 or a lower amount of samples. For example, the centroid of the samples of a cluster C1, C2, C3 may be determined and used as a representative sample R1, R2, R3.

The process of clustering may be performed multiple times, i.e. for each batch the clusters and the cluster tree, respectively, is updated. Finally, the input data and all of the batches, repsectively, are processed using the first clustering algorithm. Then, a representative sample may be determined for each cluster.

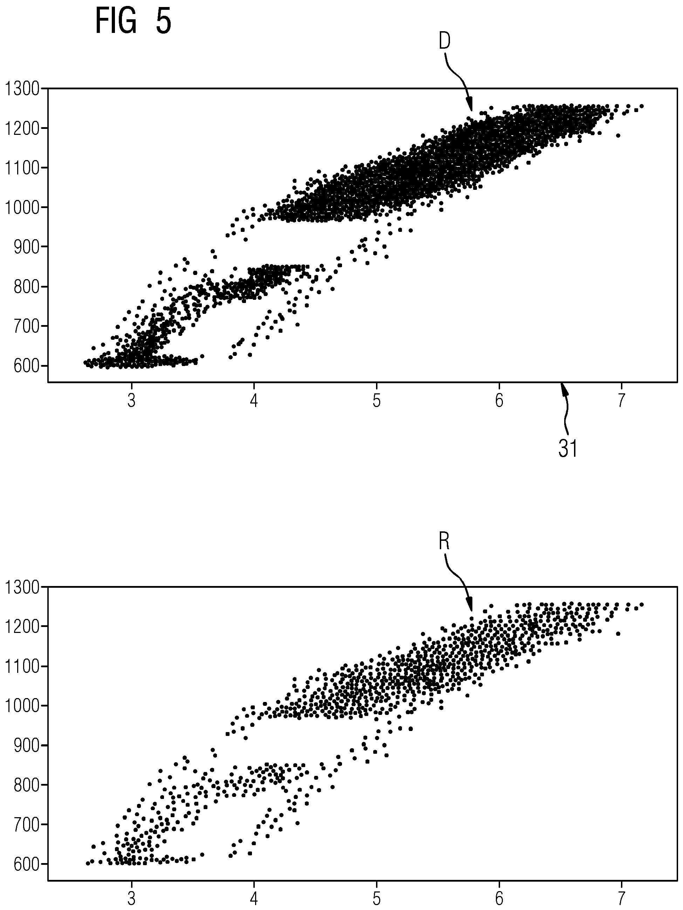

Figure 5 shows all samples of the input data D and representative samples R of the input data D obtained by data reduction. In the first image of Figure 5 all samples of the input data D are illustrated. Therein, sample bulks are present where samples are agglomerated. The second image shows the representative samples R of the input data D, e.g., obtained as described above, by reducing the number of samples. As can be seen the sample bulks are resolved and the samples are thinned out.

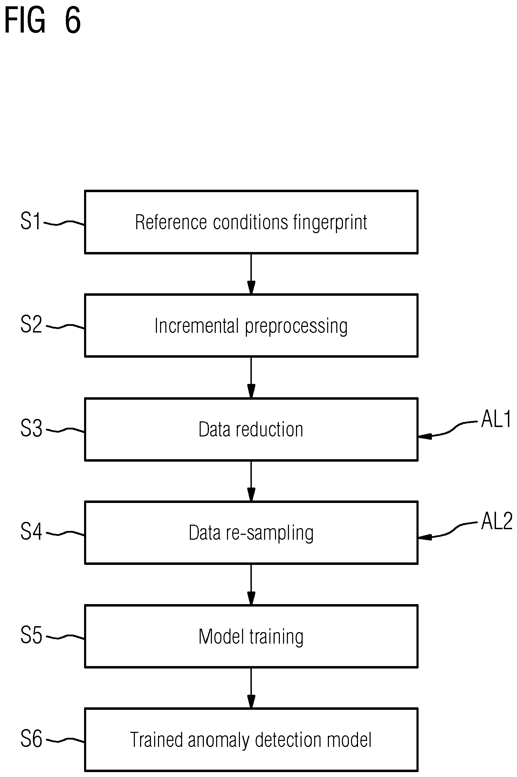

Figure 6 shows exemplary method steps of incremental preprocessing, data reduction and/or re-sampling for training a machine learning model.

In a first step S1, a fingerprint is obtained. The fingerprint is given by input data that represents reference conditions of the operation of the converter.

In a second step S2, incremental preprocessing is performed. Therein, the input data is cleansed and scaled. Furthermore, the input data may be divided into batches as described herein in order to be (incrementally) processed by the edge device.

If the baseline measurement, i.e., the fingerprint, extends over a long period of time, it may not be possible to process it at once due to hardware limitations of the edge device, e.g., the limited memory and computational power of an edge device. Hence, the input data is processed incrementally in smaller batches and the results of the previous step are forwarded to next step. Preprocessing functions derived in this step may be saved to be used later for data reduction and will be applied on new data obtained during the application phase.

In a third step S3, data reduction is performed, e.g., by clustering the (pre-processed) input data and determining representative samples for each of the one or more clusters. The data reduction may be part of the second step S2 or may be performed subsequent to said step S2.

The data reduction enables the use of a computing unit with reduced power. The reference measurement may cover a long period of time (days, weeks), whereby the amount of data becomes enormously large and can no longer be easily executed on a computing unit with limited resources as often encountered on the field level. This problem is solved by incremental data preprocessing, whereby the processing takes place in so-called batches, i.e., samples of operating parameters during predetermined time intervals. Therein, the batches are processed, e.g., according to the first clustering algorithm AL1, incrementally, i.e., one batch after the other, in a preferably consecutive manner. This allows the previous preprocessing steps to be taken into account when processing a subsequent batch. The resulting characteristics of the input data are thus compressed and may be stored and later made available for subsequent processing steps.

A reduction in the amount of data is proposed to enable the training of a machine learning model using the memory and the processor of the edge device. To that end, it is proposed to make use of a first clustering algortihm AL1, such as BIRCH. This clustering enables a memory-efficient method of machine learning to iteratively reduce large amounts of data and at the same time maintain the data quality.

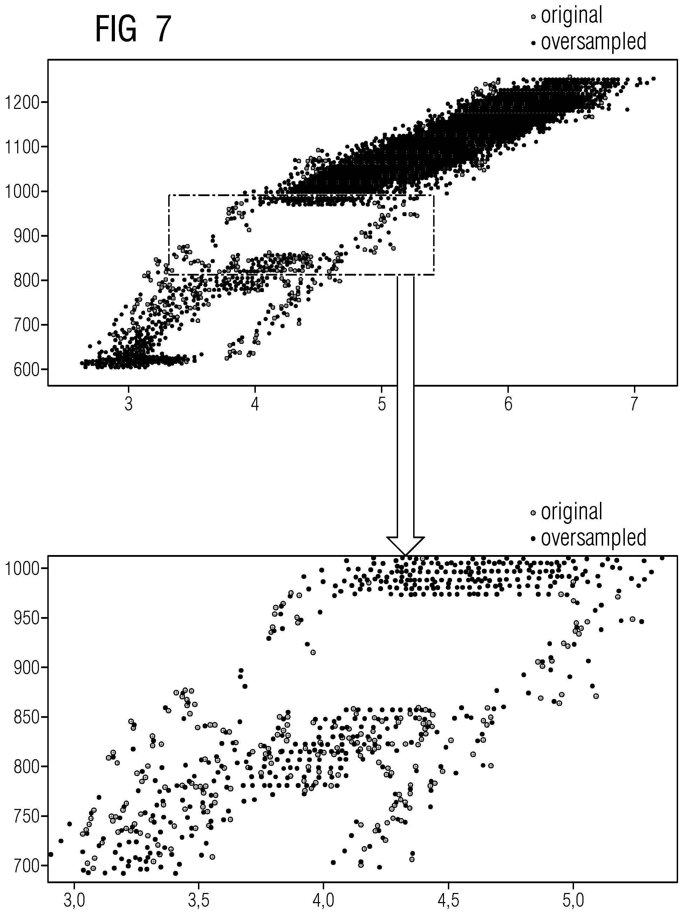

In a fourth step S4, data re-sampling is performed, e.g., in order to balance the representative samples. The input data, also referred to reference data or fingerprint, and thus also the reduced dataset (of the reference samples) may be imbalanced and non-uniform among all the operating states of the converter. Some operating states may occur more often than others. In particular, the transition between operating points occurs rarely in the input data and represents a minority "class" of operating states that occur less often than other operating states. To deal with this imbalance, the minority regions (low density regions of operating states transitions) are re-sampled. The minority regions may be determined based on a pre-clustering of the reduced dataset using a second clustering algorithm AL2, e.g., a mini-batch K-means clustering with a predefined number of clusters. The result of such a re-sampling is shown in Figure 7.

The re-sampling is thus performed, e.g., after the data reduction in step S3, in order to to compensate for underrepresented operating states, e.g., acceleration and delay ramps. The reduced data comprising the representative samples, referred to as "original" samples in Figure 7, is first clustered into a second set of clusters, e.g. 100 clusters, using a second clustering algorithm AL2, such as Mini Batch K-Means. The Mini Batch K-Means algorithm is a variant of the K-Means algorithm that uses mini batches to reduce computation time. Mini-batches may be subsets of data that are randomly selected, e.g., from the representative samples, in each training iteration. In the present case, the second clustering algorithm, e.g., MiniBatch K-means, may cluster the centroids R1, R2, R3 of C1, C2, C3,.. into a new set of clusters, i.e. second set of clusters. This is done to identify underrepresented areas. The new set of clusters is then balanced/resampled, referred to as "oversampled" in Figure 7. Since the clusters, i.e. first set of clusters, resulting from the first clustering algorithm are usually not uniformly distributed or contain a different number of samples, the Mini Batch K-Means algorithm may determine the median value of the number of samples in each cluster. All clusters with fewer points than the median may then be randomly re-sampled, cf. "oversampled" samples in Figure 7.

In addition to acceleration and deceleration ramps, there are often times other underrepresented operating states, at which the drive system and the converter, respectively, operate less often, but represent a normal operating state for the drive system and the converter, respectively. In order to take such operating conditions into account for the purpose of anomaly detection, re-sampling is proposed. Re-sampling may make use of a second clustering algorithm AL2, which enables a conclusion about underrepresented operating states. As a result, all operating states and the transitions between two operating states may be weighted equally.

In a fifth step S5 the machine learning model may be trained based on the resampled data set. Alternatively, the machine learning model may be trained on the data set as obtained after step S3, i.e., without the re-sampling of step S4. The anomaly detection can be considered as a one-class classification problem. For example a One-Class SVM, support vector machine, can be used to train the anomaly detection model. Other machine learning models, e.g., isolation forest, deep neural networks, etc., may be used instead. The trained machine learning model is saved on the edge device and may be applied later on to new unseen data in the application phase.

Figure 7 shows representative samples of the input data to which additional samples are added (re-sampled). The first image of figure 7 shows the original input data and the additional samples added to the original input data. The second image of Figure 7 shows an excerpt of the first image which contains the representative samples of the input data and the additional samples added by re-sampling the representative samples.

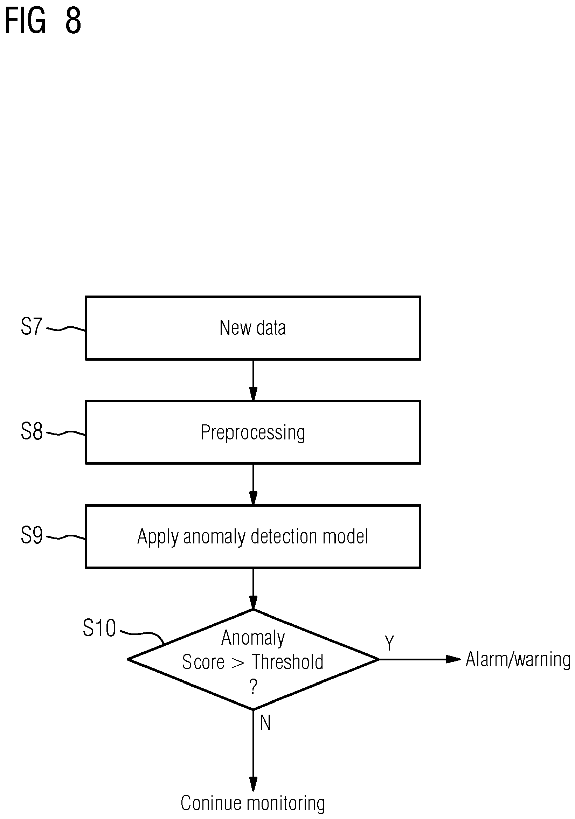

Figure 8 shows exemplary method steps when applying the machine learning model, i.e. during the application phase.

During the application phase new data is obtained from the converter in a step S7. The new data representing the current operating state of the converter. The new data may be in the form of the input data as described in the above or may be continuously processed after being obtained and/or intermideately buffered in a memory of the edge device.

In a step S8 pre-processing of the new data may be performed, e.g., in a consistent manner as described in step S2 above. This guarantees that the data is then in the same scale as the data used for training the machine learning model.

In a step S9, the new data may be input into the trained machine learning model which machine learning model serves for anomaly detection. The machine learnig model may output an anomaly score based on which the state of the converter is determined. To that end, the anomaly score is compared to a threshold in a step S10. As a result, an alarm or warning may be generated. If no abnormal operation or anomaly has been determined by the machine learning model monitoring may continue, e.g. by (pre-)processing further new data obtained from the converter.

Figure 9 shows an ilustration of an anomaly score as output by the machine learning model and a pre-determined threshold p. The threshold p may be calculated during the training phase of the machine learning model. After the training phase is completed the anomaly detection may be executed by the edge device. The output of the machine learning model and the analytics software application, respectively, is shown as a function of time. As a result, an alarm may be issued, e.g., to a user, if the anomaly scores exceeds the pre-determined threshold.

After the training phase the threshold p will be set to a default value, e.g., of 0.5. It is recommended to start the anomaly detection with this threshold value and then iteratively approach the optimum setting. If to many anomalies are being detected the threshold p should be lowerd (p < 0.5). If the drive system to be monitored for example is a critical part of the production a higher sensitivity (p > 0.5) can be helpful to detect all anomalies that occur during application phase. It is recommended to decrease and increase the threshold value in little steps by ±0.05. The value of the threshold may need to be set for each drive system and/or converter individually. A transfer is only possible if the drive system is of the exact same design and workload (usage). But even in these cases it is highly recommended to set the sensitivity factor p in the way that is described above.

Hence the analytics software application may detect changes in the application characteristic which can be harmful for the drive system or lead to a lower performance or quality of the production or product.

The analytics software application is hence defined by two phases. Phase 1 includes learning and training to generate a machine learning model of the normative state of the drive system and/or converter, respectively. In Phase 2, this machine learning model is used to detect anomalies within the application. The analytics software application is not specified for a specific drive system or customer application. It can be used for any application and may be configured according to that.

Further advantageous steps are provided in the following:
After obtaining a first batch of input data, a second batch of input data may be obtained, e.g., by the edge device. The number of samples in the second batch of input data may be reduced by clustering the second batch, e.g., according to the first clustering algorithm. Preferably the first set of clusters may be updated, e.g., by updating the clustering feature tree, which was created by applying the first clustering algorithm to the first batch. Similarly, it can be proceeded with a third, fourth etc. and for that matter all batches of the input data. That is, the n-th batch may be clustered by updating the previously obtained first set of clusters. Hence, an iterative clustering of the batches of input data is proposed.

Furthermore, the samples of the first batch and/or second batch may thus be clustered into the first set of clusters. Therein, a maximum cluster radius for each cluster in the first set of clusters is determined based on a pre-set maximum distance between two samples, e.g., a given percentage, e.g., 0.25%, of a nominal speed of the converter. Thereby the amount of data reduction and the resolution up to which a clustering is performed may be controlled. This may be particularly useful for adapting the amount of data for training the machine learning model to the storage capacity of the second memory of the edge device. Furthermore, making the cluster radius dependent on the nominal speed of the converter allows for adapting the resolution of the condition monitoring to the specifics of the application of the converter. The nominal speed is the speed at which a motor of the drive system reaches its maximum power.

It is further proposed to record the input data, preferably on a first memory, preferably a mass storage memory, to create the first batch, and preferably the second batch, from the input data, e.g., by aggregating successive samples of the input data into the first and/or second batch, respectively, and to store the first batch, and preferably the second batch on a second memory, preferably a volatile memory, wherein in particular the input data comprises a data volume that exceeds a storage capacity of the second memory and/or wherein a data volume of the first and/or second batch is adapted to the storage capacity of the second memory. Thereby the iterative processing of the input data by way of one or more batches, the input data is divided into, is achieved.

It is further proposed to overwrite, after reducing the number of samples of the first batch, at least in part the first batch of input data in the second memory unit with the second batch of input data. The reduction of samples may be performed accordingly using the first clustering algorithm and by determining a representative sample of for each of the clusters created. The first batch that is stored in the second memory may then at least in part be overwritten by the samples of second batch. Thereby, the storage capacity of the second memory is reused for the iterative processing of the batches created from the input data.

It is further proposed to split the input data into a plurality of batches by aggregating successive samples. As described above, the splitting may be performed by dividing the input data into the multiple batches, e.g., according to a given number of samples and/or according to a period of time.

It is further proposed to determine a centroid of each cluster of the first set of clusters and using the centroid as the representative sample for each cluster of the first set of clusters. Thereby a plurality of samples of a cluster may be reduced to a single sample. This representative sample comprises the information necessary to train the machine learning model.

It is further proposed to cluster the representative samples, preferably according to a second clustering algorithm, e.g., Mini Batch K-means, into a second set of clusters and to balance the number of representative samples in each cluster of the second set of clusters, e.g., by adding or removing further representative samples to a cluster of the second set of clusters.

It is further proposed to use the operating parameters of the converter, wherein the operating parameters of the converter comprise one or more of the following: a speed setpoint of the converter, an actual, preferably unsmoothed, speed value, an actual, preferably absolute and/or unsmoothed, current value, an actual, preferably unsmoothed, phase current, an actual DC link voltage, an output voltage, an actual torque-generating current value, an actual, preferably unsmoothed, torque value.

It is further proposed to record input data by cyclically reading, preferably subsampling, the operating parameters of the converter by a device communicatively coupled to the converter. The device communicatively coupled to the converter may be an edge device as described in the above. The subsampling of the operating parameters of the converter reduces the amount of data for training the machine learning model. The clustering of the samples in the batches further reduces the amount of data used for training the machine learning model.

It is further proposed to determine an abnormal operating state of the converter or an anomaly in the operation of the converter based on the trained machine learning model, and to output an alert indicating the abnormal operating state and/or the anomaly. The alert may be an alarm or a warning which is displayed, e.g., on a user interface.

It is further proposed that the input data comprises samples of a plurality of operating parameters of the converter and to determine, e.g., based on an error indicator, preferably a (mis)classification error of the machine learning model, a first operating parameter from the plurality of operating parameters potentially responsible for the abnormal operating state and/or the anomaly, and to adjust the first operating parameter of the converter. The error indicator may be a mean-squared error. For example, the machine learning model may be a (one class) classifier, that determines continuous anomaly scores, which are converted to a class label, e.g., "anomaly", in the present case, using a suitable threshold. For example, a support vector machine, SVM, may be used for the classification. The error indicator and/or the misclassification error may be based on a measure of feature importance, e.g. SHAP values, of the machine learning model. The SVM may be trained based on the fingerprint, of which all samples belong to a single class, i.e. the normal operation. Hence, the machine learning model is trained on normal operating conditions, so that when a new data is input, the machine learning model is able to determine whether an anomaly is present in the newly input data. Then the operating parameter contributing the most to the mean square error may be identified. On that basis, the operating parameter potentially responsible for the anomaly may be identified. Subsequently, corrective action can be taken by adjusting the operating parameter potentially responsible for the anomaly. Such adjustment may be made automatically by controlling the or by a user input.

It is thus further proposed to adjust the speed of the converter in case an abnormal operating state or an anomaly is determined, e.g., by adjusting the speed setpoint of the converter, or to adjust a DC link voltage of the converter, e.g., by (de-) coupling the converter to/from a voltage line.

It is further proposed to use input data representing one or more nominal operating states of the converter.

It is further proposed to use of the trained machine learning model in order to perform condition monitoring of the converter.

Furthermore, a trained machine learning model is proposed as obtained by training in accordance with any one of the embodiments described herein.

Finally, a device, preferably comprising a first and/or a second memory unit is proposed.

Figure 10 shows a device comprising a processing unit and a first and a second memory. The device shown preferably is an edge device, e.g., as described in connection with Figure 1.

The input data may be obtained from the converter and stored in the first memory ROM. Thereupon, the input data may be split or divided in a single operation or successively into a pluratliy of batches. A first batch may then be transmitted to the second memory, where it is stored. The processor may then access the first batch in the second memory and perform the steps as described herein, in particular in connection with Figures 3 to 6. Subsequently, a second batch may be transmitted from the first memory to the second memory, where the second batch is stored, e.g. , by overwriting the first batch (at least in part). The steps as described herein, in particular in connection with Figure 3 to 6, may be performed by the processor for the second batch and/or further batches. The further batches may be handled in the same way in order obtain a trained machine learning model. The machine learning model may also be stored in the edge device, e.g., in the first memory for later usage or in the second memory for execution during the applicaition phase.

The advantages of the proposed solution lie in the individual usability of anomaly detection for the user. The reference measurement allows each user to customize the anomaly detection individually. In addition, the sensitivity can be individually adjusted. Error and warning thresholds are automatically preset on the basis of the reference measurement and thus directly take into account the special features of each drive system and converter, respectively, but can also be adapted by the user if necessary. By reducing the data accordingly, the clustering algorithm or the machine learning model can also be executed on less performant computing units. The algorithm only reduces the amount of data but not its quality and significance. The underrepresented samples in the data, which are often found in drive system during acceleration and deceleration processes, are also specifically taken into account. These operating states are taken into account for the purpose of anomaly detection as well as a normal operating states of the drive system and converter, respectively.

## Claims

1. A computer-implemented method of providing a machine learning model (ML) for condition monitoring of an electric power converter (1) comprising the steps of:
- obtaining a first batch (B1) of input data (D), the input data (D) comprising a number of samples (31) of one or more operating parameters (P1, ..., Pn) of the converter (1) during at least one operating state (O1, O2) of the converter (1),
- reducing the number of samples (31) of the first batch (B1) by clustering the samples of the first batch (B1) into a first set of clusters (C1), preferably according to a first clustering algorithm (AL1), e.g., based on a clustering feature tree, such as BIRCH, and determining at least one representative sample (R1) for each cluster (C1),
- providing the representative samples (R) for training the machine learning model (ML) and/or training the machine learning model (ML) based on the representative samples (R1).

2. The method of claim 1 comprising the step of:
obtaining a second batch (B2) of input data (D),
reducing the number of samples in the second batch (B2) of input data (D), by clustering the second batch (B2), preferably by updating the first set of clusters (C1), e.g., by updating the clustering feature tree, preferably created by the first batch (B1).

3. The method of claim 1 or 2 comprising the step of:
clustering the samples of the first batch (B1) and/or second batch (B2) into the first set of clusters (C1), wherein a maximum cluster radius for each cluster in the first set of clusters (C1) is determined based on a pre-set maximum distance between two samples (31), e.g., a given percentage, e.g., 0.25%, of a nominal speed of the converter (1).

4. The method of claim 1, 2 or 3 comprising the steps of:
recording input data (D), preferably on a first memory (ROM),
preferably a mass storage memory,
creating the first batch (B1), and preferably the second batch (B2), from the input data (D), e.g., by aggregating successive samples (31) of the input data (D) into the first and/or second batch (B1, B2), respectively,
storing the first batch (B1), and preferably the second batch (B2) on a second memory (RAM), preferably a volatile memory,
in particular wherein the input data (D) comprises a data volume that exceeds a storage capacity of the second memory (RAM) and/or wherein a data volume of the first and/or second batch (B1, B2) is adapted to the storage capacity of the second memory (RAM).

5. The method of the preceding claim comprising the step of:
overwriting, after reducing the number of samples (31) of the first batch (B1), at least in part the first batch (B1) of input data in the second memory unit (RAM) with the second batch of input data (B2).

6. The method of the preceding claim comprising the step of:
splitting the input data into a plurality of batches (B1, B2,..., Bn) by aggregating successive samples (31).

7. The method of any one of the preceding claims further comprising the step of:
determining a centroid of each cluster (C) of the first set of clusters (C1) and using the centroid as the representative sample (R) for each cluster of the first set of clusters (C1).

8. The method of any one of the preceding claims comprising the step of:
clustering the representative samples (R), preferably according to a second clustering algorithm (AL2), e.g., (Mini Batch) K-means, into a second set of clusters and balancing the number of representative samples in each cluster of the second set of clusters, e.g., by adding or removing further representative samples (R) to a cluster of the second set of clusters.

9. The method of any one of the preceding claims:
wherein the operating parameters (P1, ..., Pn) of the converter comprise one or more of the following:
a speed setpoint of the converter,
an actual, preferably unsmoothed, speed value,
an actual, preferably absolute and/or unsmoothed, current value,
an actual, preferably unsmoothed, phase current,
an actual DC link voltage,
an output voltage,
an actual torque-generating current value,
an actual, preferably unsmoothed, torque value.

10. The method of any one of the preceding claims comprising the steps of:
recording input data (D) by cyclically reading, preferably subsampling, the operating parameters of the converter (1) by a device (2) communicatively coupled to the converter (1),
and/or further comprising the steps of:
determining an abnormal operating state (O2) of the converter (C) or an anomaly in the operation of the converter (1) based on the trained machine learning model (ML), and outputting an alert indicating the abnormal operating state (O2) and/or the anomaly.

11. The method of any one of the preceding claims comprising the steps of:
wherein the input data (D) comprises samples of a plurality of operating parameters (P1, ..., Pn) of the converter (1), determining, e.g., based on an error indicator, preferably a (mis)classification error of the machine learning model (ML),
a first operating parameter (P1) from the plurality of operating parameters (P1, ..., Pn) potentially responsible for the abnormal operating state (O2) and/or the anomaly, and adjusting the first operating parameter (P1) of the converter (1) .

12. The method of any one of the preceding claims comprising the steps of:
adjusting the speed of the converter (1) in case an abnormal operating state (O2) or an anomaly is determined, e.g., by adjusting the speed setpoint of the converter (1), or
adjusting a DC link voltage of the converter (1), e.g., by (de-)coupling the converter (1) to/from a voltage line (VL).

13. The method of any one of the preceding claims comprising the steps of:
the input data (D) representing one or more nominal operating states (O1) of the converter (1).

14. Use of the trained machine learning model (ML) as obtained by any one of the claims 1 to 13 in order to perform condition monitoring of the converter (1).

15. A trained machine learning model (ML) obtained by the steps of any one of the claims 1 to 13.

16. A device (1, 2), preferably comprising a first and/or a second memory unit (ROM, RAM), operative to perform the steps according to any one of the preceding claims 1 to 13.
